# FASCICULE DE BREVET EUROPEEN

(11) **EP 3 283 571 B1**
(45) Date de publication et mention de la délivrance du brevet: **03.06.2020**
(21) Numéro de dépôt: 16719279.8
(22) Date de dépôt: 13.04.2016
(51) Int. Cl.: C08L 53/02, C08L 91/00, C08L 91/06, C08L 95/00

(54) **LIANT CLAIR ET SES APPLICATIONS**
DURCHSICHTIGE BINDEMITTEL UND DEREN ANWENDUNGEN
CLEAR BINDER AND APPLICATIONS THEREOF

(30) Priorité: 13.04.2015 FR 1553197
(43) Date de publication de la demande: 21.02.2018
(73) Titulaire: Total Marketing Services, 92800 Puteaux (FR)
(72) Inventeur: BARJON, Danièle, 38780 Les Roches De Condrieu (FR); GAMET, Olivier, 77700 Bailly Romainvilliers (FR); MOUAZEN, Mouhamad, 69008 Lyon (FR)
(74) Mandataire: Corizzi, Valérie
(86) Numéro de dépôt international: PCT/EP2016/058108
(87) Numéro de publication internationale: WO 2016/166152

(56) Documents cités:
- EP-A1- 1 473 327
- WO-A1-01/53409
- XIU HUA YANG: "Study on Performance of SBS Modified Asphalt", ADVANCED MATERIALS RESEARCH, vol. 753-755, 30 août 2013 (2013-08-30), pages 715-718, XP055246768, DOI: 10.4028/www.scientific.net/AMR.753-755.715
- PING LI ET AL: "Performance of SBS Modified Asphalt and Influence of Aging", INTELLIGENT SYSTEM DESIGN AND ENGINEERING APPLICATION (ISDEA), 2010 INTERNATIONAL CONFERENCE ON, IEEE, 13 octobre 2010 (2010-10-13), pages 57-60, XP032014523, DOI: 10.1109/ISDEA.2010.349 ISBN: 978-1-4244-8333-4

## Description

### DOMAINE TECHNIQUE

La présente invention concerne un liant clair et ses utilisations dans des compositions colorées dans certaines applications routières et/ou industrielles.

### ARRIERE-PLAN TECHNOLOGIQUE

Les liants bitumineux classiques, en raison de la présence d'asphaltènes, sont de couleur noire et sont donc difficilement colorables. Les revêtements colorés sont de plus en plus utilisés car ils permettent entre autres, d'améliorer la sécurité des usagers de la route en identifiant clairement les voies spécifiques telles que les voies piétonnes, les pistes cyclables, les voies de bus. Ils permettent aussi de matérialiser certaines zones de danger comme les entrées d'agglomération ou les virages dangereux. Les revêtements colorés favorisent la visibilité en condition de faible luminosité, par exemple la nuit ou dans des sites particuliers tels que les tunnels. Enfin, ils permettent tout simplement d'améliorer l'aspect esthétique de la voirie urbaine et peuvent être utilisés pour les places publiques, les cours d'immeubles et d'écoles, les trottoirs, les rues piétonnes, les allées de jardins et de parcs, les aires de parking et de repos.

Par conséquent, pour toutes les applications précitées, on préfère utiliser des liants clairs de synthèse, ne contenant pas d'asphaltènes et pouvant être colorés.

Les liants clairs de l'art antérieur sont en général constitués d'un agent plastifiant, par exemple une huile d'origine pétrolière, un agent structurant, par exemple une résine hydrocarbonée, et un polymère. La composition des liants clairs détermine certaines propriétés essentielles de ces liants, en particulier l'indice de plasticité, la viscosité du liant, ou la couleur qui doit être la plus claire possible.

La demande de brevet WO 01/53409 décrit un liant clair comprenant des huiles blanches hydrogénées comprenant au moins 60% de carbones paraffiniques (selon la méthode ASTM D2140), et une résine hydrocarbonée, le cas échéant en mélange avec des copolymères du type éthylène-acétate de vinyle (EVA) ou polyéthylène basse densité, par exemple du type EPDM (éthylène-propylène-diène-monomère). Ces compositions sont recommandées pour la réalisation de membranes ou de chapes d'étanchéité colorées. La demande de brevet EP1783174 décrit un liant clair comprenant une huile avec une teneur en naphténiques entre 35% et 80% et une résine hydrocarbonée.

La demande de brevet EP1473327 décrit un liant clair comprenant une huile synthétique, une résine et un polymère de type SBS ou SIS et leurs utilisations dans la préparation de membranes ou chapes d'étanchéité.

Pour une utilisation dans des applications de revêtements colorés, un liant clair devrait idéalement satisfaire aux propriétés physico-mécaniques suivantes :
- un indice de plasticité satisfaisant, c'est-à-dire un point de fragilité bas (Fraass), et un point de ramollissement (Température Bille-Anneau) élevé,
- une faible viscosité,
- une couleur claire et peu évolutive dans le temps,
- une bonne résistance à l'orniérage,
- une bonne résistance à la fissuration thermique,
- une faible sensibilité à l'eau.

La société demanderesse a établi de façon surprenante, que le choix judicieux d'une huile synthétique à haute teneur en composés paraffiniques et d'un copolymère bloc par exemple du type SBS permettait d'obtenir un liant clair aux propriétés physico-mécaniques améliorées.

### RESUME

La présente invention a ainsi pour objet un liant clair comprenant
(i) un agent plastifiant constitué d'une huile contenant une teneur totale en composés paraffiniques, mesurée selon la méthode ASTM D2140, d'au moins 50%, de préférence d'au moins 60% en poids, plus préférentiellement comprise entre 50% et 90%, de préférence entre 60% et 80% et
(ii) un copolymère bloc à base de motifs diène conjugué et de motifs hydrocarbure monovinyl aromatique, par exemple à base de motif butadiène et de motifs styrène.

Dans un mode de réalisation préféré, l'huile est une huile synthétique issue des coupes d'unité de désasphaltage (ou « huile DAO »).

Dans un mode de réalisation spécifique, l'huile contient une teneur totale en composés paraffiniques supérieure ou égale à 50%, de préférence supérieure ou égale à 60% en poids, et une teneur totale en composés naphténiques inférieure ou égale à 25% en poids, mesurées selon la méthode ASTM D2140.

Par exemple, l'huile contient une teneur totale en composés paraffiniques comprise entre 50% et 90% et une teneur totale en composés naphténiques comprise entre 5% et 25% en poids, mesurées selon la méthode ASTM D2140.

Dans un mode de réalisation spécifique, l'huile contient une teneur totale en composés paraffiniques supérieure ou égale à 50%, de préférence supérieure ou égale à 60% en poids, une teneur totale en composés naphténiques inférieure ou égale à 25% en poids, et une teneur totale en composés aromatiques inférieure ou égale à 25% en poids, mesurées selon la méthode ASTM D2140.

Par exemple, l'huile contient une teneur totale en composés paraffiniques, comprise entre 50% et 90%, de préférence entre 60% et 80% en poids, une teneur totale en composés naphténiques comprise entre 5% et 25% en poids, et une teneur totale en composés aromatiques comprise entre 5% et 25% en poids, mesurées selon la méthode ASTM D2140.

Dans un mode de réalisation spécifique, éventuellement combiné aux modes précédents, l'huile a un point d'aniline, mesuré selon la norme ISO2977 : 1997, supérieur ou égal à 80°C, de préférence supérieur ou égal à 90 °C, par exemple supérieur à 100°C.

Le liant clair selon l'invention comprend de préférence (i) de 40 à 80% en poids d'agent plastifiant, (ii) de 20 à 50% en poids de résine, (iii) de 1 à 7% en poids de copolymère ; et, (iv) éventuellement de 0,05% à 0,5% en poids de dope d'adhésivité, par exemple d'amine, par rapport au poids de liant clair.

Le liant clair selon l'invention comprend de préférence (i) de 40 à 80% en poids d'agent plastifiant, (ii) de 20 à 50% en poids de résine, (iii) de 1 à 7% en poids de copolymère ; et, (iv) de 0,05% à 0,5% en poids de dope d'adhésivité, par exemple d'amine, par rapport au poids de liant clair.

Avantageusement, le liant clair selon l'invention comprend (i) de 45% à 70% en poids d'agent plastifiant, (ii) de 25 à 40% en poids de résine, (iii) de 2% à 5% en poids de copolymère ; et, (iv) éventuellement de 0,1% et 0,3% en poids de dope d'adhésivité, par rapport au poids total de liant clair.

Selon un autre mode de réalisation avantageux, le liant clair selon l'invention comprend (i) de 45% à 70% en poids d'agent plastifiant, (ii) de 25 à 50% en poids de résine, (iii) de 1% à 7% en poids de copolymère ; et, (iv) éventuellement de 0,1% et 0,3% en poids de dope d'adhésivité, par rapport au poids total de liant clair.

Selon un mode de réalisation préféré, le liant clair selon l'invention consiste essentiellement en (i) de 40 à 80% en poids d'agent plastifiant, (ii) de 20 à 50% en poids de résine, (iii) de 1 à 7% en poids de copolymère.

Selon un autre mode de réalisation préféré, le liant clair selon l'invention consiste essentiellement en (i) de 40 à 80% en poids d'agent plastifiant, (ii) de 20 à 50% en poids de résine, (iii) de 1 à 7% en poids de copolymère et (iv) de 0,05% à 0,5% en poids de dope d'adhésivité.

Avantageusement, le liant clair consiste essentiellement en (i) de 45% à 70% en poids d'agent plastifiant, (ii) de 25 à 40% en poids de résine (iii) de 2% à 5% en poids de copolymère ; et, (iv) de 0,1% et 0,3% en poids de dope d'adhésivité, par rapport au poids total de liant clair.

Selon un autre mode de réalisation avantageux, le liant clair consiste essentiellement en (i) de 45% à 70% en poids d'agent plastifiant, (ii) de 25 à 50% en poids de résine (iii) de 1% à 7% en poids de copolymère ; et, (iv) de 0,1% et 0,3% en poids de dope d'adhésivité, par rapport au poids total de liant clair.

Dans un autre mode de réalisation spécifique, éventuellement combiné aux modes précédents, le copolymère bloc est un copolymère à base de motifs de styrène et de butadiène qui comprend une teneur pondérale en groupement 1-2 vinyle allant de 5 à 70%, de préférence de 5 à 50%.

Dans un autre mode de réalisation spécifique, éventuellement combiné aux modes précédents, le copolymère bloc est un copolymère à base de motifs de styrène et de butadiène qui comprend une teneur pondérale en groupement 1-2 vinyle allant de 10 à 70%, de préférence de 10 à 50%. Dans un autre mode de réalisation spécifique, éventuellement combiné aux modes précédents, le copolymère bloc est avantageusement un copolymère bloc à base de motifs de styrène et de butadiène qui comprend une teneur pondérale en butadiène allant de 50 à 95% et une teneur pondérale en groupement 1,2-vinyle allant de 10 à 70%.

Par exemple, ledit copolymère bloc à base de motifs de styrène et de butadiène a une masse moléculaire moyenne comprise entre 10 000 et 500 000, de préférence entre 50000 et 200 000, et plus préférentiellement entre 50 000 et 150 000 daltons. De préférence, on utilisera un copolymère bloc styrène/butadiène ou bloc styrène/butadiène/styrène.

Les liants clairs selon l'invention sont avantageusement caractérisés en ce qu'ils présentent un indice de couleur inférieur ou égal à 4, de préférence inférieur ou égal à 3, tel que déterminé selon l'échelle ASTM DH4. En outre, ils peuvent avantageusement présenter une température de ramollissement Température Bille-Anneau déterminée selon la norme NF EN1427 comprise entre 55°C et 90°C, et un point de fragilité Fraass déterminé selon la norme NF EN 12593 inférieur ou égal à -5°C, de préférence inférieur ou égal à -10°C, plus préférentiellement inférieur ou égal à -12°. Ils peuvent aussi présenter une viscosité dynamique à 135°C inférieure ou égale à 0,5 Pa.s, de préférence inférieure ou égale à 0,35 Pa.s, mesurée selon la norme NF EN13702.

L'invention porte également sur un procédé de préparation d'un liant clair selon l'invention tel que décrit ci-dessus, ledit procédé comprenant les étapes suivantes :
- le mélange de l'agent plastifiant, par exemple une huile DAO et chauffage à une température comprise entre 140 et 200°C, par exemple de 10 minutes à 30 minutes,
- l'ajout de l'agent structurant, par exemple une résine hydrocarbonée, mélange et chauffage à une température comprise entre 140 et 200°C, par exemple de 30 minutes à 2 heures,
- l'ajout du copolymère, mélange et chauffage à une température comprise entre 140 et 200°C, par exemple de 90 minutes à 2 heures 30 minutes,
- l'ajout de l'éventuel dope d'adhésivité, mélange et chauffage entre 140 et 200°C entre 5 minutes et 20 minutes.

L'ordre des étapes du procédé ci-dessus peut être modifié le cas échéant.

L'invention concerne en outre un enrobé, coloré ou colorable, comprenant un liant clair selon l'invention, un granulat et/ou autres charges minérales, et éventuellement un ou plusieurs pigments.

L'invention concerne en outre, une émulsion à base de liant synthétique clair selon l'invention, notamment pour la fabrication d'enduits superficiels ou d'enrobés coulés à froid.

L'invention vise également les applications du liant clair selon l'invention, et notamment à la réalisation d'enrobés colorables ou colorés, destinés à des revêtements routiers ou urbains. Le liant clair selon l'invention est par exemple utilisé en mélange avec des granulats ou autres charges minérales, des dopes et/ou des pigments.

L'invention concerne également l'utilisation du liant clair comme lubrifiant pour les câbles de téléphériques, ou plus généralement, pour les câbles utilisées dans le transport de charges lourdes, et exposés à des températures inférieures à -10°C, et/ou à de fortes amplitudes thermiques.

Dans l'ensemble de la demande, lorsque l'on emploie l'expression « compris entre x et y », on entend que les bornes sont également incluses dans l'intervalle ainsi défini.

### DESCRIPTION DETAILLEE DE L'INVENTION

L'invention concerne un liant clair comprenant
(i) un agent plastifiant constitué d'une huile contenant une teneur totale en composés paraffiniques, mesurée selon la méthode ASTM D2140, d'au moins 50%, de préférence d'au moins 60% en poids, plus préférentiellement comprise entre 50% et 90%, de préférence entre 60% et 80%, et
(ii) un copolymère bloc à base de motifs diène conjugué et de motifs hydrocarbure monovinyl aromatique, par exemple à base de motif butadiène et de motifs styrène.

Le liant clair est une composition utilisable en substitution des liants à base de bitume pour la préparation par exemple d'enrobé bitumineux coloré. Un liant clair est exempt d'asphaltènes et peut donc garder la teinte naturelle du granulat auquel il est mélangé ou être aisément coloré à l'aide de pigments.

Les constituants essentiels d'un liant clair sont :
i) un agent plastifiant, par exemple une huile naturelle ou synthétique, dépourvue d'asphaltènes,
ii) un agent structurant, par exemple une résine hydrocarbonée,
iii) un copolymère bloc,
iv) les cas échéant, des agents dopants, ou dopes, ou dopes d'adhésivité.

### L'agent plastifiant

Par « agent plastifiant », on entend au sens de l'invention, un constituant chimique permettant de fluidifier et de réduire la viscosité et le module du liant obtenu.

Dans un mode préféré de réalisation de l'invention, l'agent plastifiant est choisi parmi les huiles synthétiques issues des coupes de désasphaltage de distillation sous pression réduite (résidu sous vide, RSV) de pétrole brut (ci-après dénommée « huile DAO »).

En particulier, dans un mode de réalisation préféré, l'agent plastifiant selon l'invention est constitué uniquement d'une huile DAO.

Les teneurs en composés paraffiniques, naphténiques et aromatiques mentionnées dans la présente demande sont déterminées selon la norme ASTM D2140, en % poids par rapport au poids de l'huile.

Dans un mode de réalisation spécifique, l'agent plastifiant est une huile, par exemple une huile DAO, contenant une teneur totale en composés paraffiniques d'au moins 50% en poids, de préférence d'au moins 60% en poids, par exemple comprise entre 50% et 90%, de préférence entre 60% et 90%, plus préférentiellement entre 50% et 80% et en particulier compris entre 55% et 70% ou en particulier compris entre 60% et 75%.

Dans un mode de réalisation plus spécifique, l'agent plastifiant est une huile, par exemple une huile DAO, contenant en outre une teneur totale en composés naphténiques qui n'excède pas 25%, par exemple comprise entre 5% et 25%, et en particulier compris entre 10% et 25%.

Dans un mode de réalisation plus spécifique, l'agent plastifiant est une huile, par exemple une huile DAO, contenant en outre une teneur totale en aromatiques qui n'excède pas 25%, par exemple comprise entre 5% et 25%, et en particulier compris entre 8% et 18%.

Dans un mode particulièrement préféré, l'agent plastifiant est une huile, par exemple une huile DAO, comprenant les teneurs respectives suivantes :
(i) une teneur totale en composés paraffiniques comprise entre 50% et 90% ;
(ii) une teneur totale en composés naphténiques comprise entre 5% et 25%, par exemple entre 15% et 25% ; et
(iii) une teneur totale en composés aromatiques comprise entre 5% et 25%, par exemple entre 10% et 15%.

Dans un mode plus particulièrement préféré, l'agent plastifiant est une huile, par exemple une huile DAO, comprenant les teneurs respectives :
(i) une teneur totale en composés paraffiniques comprise entre 60% et 75% ;
(ii) une teneur totale en composés naphténiques comprise entre 5% et 25%, par exemple entre 15% et 25% ; et
(iii) une teneur totale en composés aromatiques comprise entre 5% et 25%, par exemple entre 10% et 15%.

Des huiles répondant aux caractéristiques ci-dessus et utilisables pour la préparation du liant clair selon l'invention sont obtenues par les procédés de désasphaltage des résidus sous vide (RSV) issus du raffinage du pétrole, par exemple par un désasphaltage à l'aide d'un solvant en C3 à C6, de préférence au propane. Ces procédés de désasphaltages sont bien connus de l'homme du métier et sont décrits par exemple dans Lee et al 2014, Fuel Processing Technology 119 : 204-210 : Les résidus issus de la distillation sous vide (RSV) sont séparés selon leur poids moléculaire en présence de solvant C3 à C6 (par exemple le propane). L'huile dite DAO (« deasphalted oil ») ainsi obtenue est riche en paraffine, présente une très faible teneur en asphaltènes, a une température d'évaporation comprise entre 440°C et 750°C, et une gravité API bien supérieure à celle des résidus sous vide.

Les teneurs respectives en composés paraffiniques, naphténiques et aromatiques dépendent dans une certaine mesure de la nature du pétrole brut à l'origine de l'huile DAO et du processus de raffinage utilisé. L'homme du métier sait déterminer les teneurs respectives en composés paraffiniques, naphténiques et aromatiques d'une huile DAO par exemple à l'aide de la méthode de fractionnement SARA également décrite dans Lee et al 2014, Fuel Processing Technology 119 : 204-210 et ainsi sélectionner l'huile DAO appropriée pour la préparation du liant clair selon l'invention.

Dans un mode de réalisation spécifique, la quantité d'agent plastifiant mise en œuvre dans le procédé de préparation du liant clair est comprise entre 40% et 80%, de préférence entre 45% et 70% en poids par rapport au poids total de liant clair.

### L'agent structurant

Par « agent structurant », on entend tout constituant chimique conférant des propriétés mécaniques et une cohésivité satisfaisante audit liant.

L'agent structurant utilisé dans le cadre de l'invention, est une résine, de préférence choisie parmi les résines d'origine pétrolière hydrocarbonées, par exemple issue de la copolymérisation de coupes pétrolières aromatiques, aliphatiques, cyclopentadiéniques, prises seules ou en mélange, de préférence issues de coupes pétrolières aromatiques. Par exemple, il peut s'agir d'une résine thermoplastique polycycloaliphatique, par exemple du type homopolymères de cyclopentadiène hydrogénés, à faible masse moléculaire.

Plus particulièrement, la résine hydrocarbonée du type des cyclopentanes a un point de ramollissement (ou température Bille-Anneau, TBA, selon la norme NF T 66-008) supérieur à 125°C, et un indice de couleur Gardner (selon la norme NF T 20-030) égal au maximum à 1.

D'autres exemples de résines utilisables comme agent structurant incluent, sans être limitatifs, les résines d'origine végétales obtenues à partir de végétaux et/ou de plantes. Elles peuvent être dites de récolte, c'est-à-dire récoltées à partir du végétal vivant. Elles peuvent être utilisées telles quelles, on parle alors de résines naturelles, ou être transformées chimiquement, on parle alors de résines naturelles modifiées.

Parmi les résines de récolte, on trouve les résines accroïdes, le dammar, les colophanes naturelles, les colophanes modifiées, les esters de colophane et les résinates métalliques. Celles-ci peuvent être prises seules ou en mélange.

Parmi les colophanes naturelles, on peut citer les colophanes de gemme et de bois, en particulier de pin, et/ou de tall oil. Ces colophanes naturelles peuvent être prises seules ou en mélange.

Parmi les colophanes modifiées, on peut citer les colophanes hydrogénées, les colophanes dismutées, les colophanes polymérisées et/ou les colophanes maléisées. Ces colophanes naturelles modifiées peuvent être prises seules ou en mélange, et subir un ou plusieurs traitement de dismutation, polymérisation et/ou maléisation.

Parmi les esters de colophanes, on peut citer les esters méthyliques de colophanes naturelles, les esters méthyliques de colophanes hydrogénées, les esters du glycérol et de colophanes naturelles, les esters du glycérol et de colophanes hydrogénées, les esters du glycérol et de colophanes dismutées, les esters du glycérol et de colophanes polymérisées, les esters du glycérol et de colophanes maléisées, les esters du pentaérythritol et de colophanes naturelles et les esters du pentaérythritol et de colophanes hydrogénées. Ces esters de colophanes peuvent être pris seuls ou en mélange et provenir de colophanes ayant subi un ou plusieurs traitement de dismutation, polymérisation et/ou maléisation.

Les esters du pentaérythritol et de colophanes naturelles et les esters du pentaérythritol et de colophanes hydrogénées sont les esters de colophanes préférés.

Parmi les résinates métalliques, on peut citer les carboxylates métalliques, par exemple de Ca, Zn, Mg, Ba, Pb, Co, obtenus à partir de colophanes naturelles ou de colophanes modifiées. On préfère les résinates de calcium, les résinates de zinc, les résinates mixtes calcium/zinc, pris seuls ou en mélange.

Le rapport en poids entre l'agent structurant et l'agent plastifiant mis en œuvre pour la préparation du liant clair selon l'invention, est compris en général, entre 0,3 et 1,5, par exemple entre 0, 5 et 1.

Dans un mode de réalisation spécifique, la quantité d'agent structurant mise en œuvre dans le procédé de préparation du liant clair est comprise entre 25 et 50% en poids par rapport au poids total de liant clair.

### Le polymère

Le polymère mis en œuvre dans le procédé de préparation du liant clair selon l'invention est un copolymère bloc à base de motifs diène conjugués et de motifs hydrocarbure monovinyl aromatiques. Le diène conjugué est choisi de préférence parmi ceux comportant de 4 à 8 atomes de carbone par monomère, par exemple le butadiène, le 2-méthyl-1,3-butadiène (isoprène), le 2,3-diméthyl-1,3-butadiène, le 1,3-pentadiène et le 1,2-hexadiène, chloroprène, butadiène carboxylé, isoprène carboxylé, en particulier le butadiène et l'isoprène, et leurs mélanges.

L'hydrocarbure monovinyl aromatique est choisi de préférence parmi le styrène, l'o-méthyl styrène, le p-méthyl styrène, le p-tert-butylstyrène, le 2,3 diméthyl- styrène, Pa-méthyl styrène, le vinyl naphtalène, le vinyl toluène, le vinyl xylène, et analogues ou leurs mélanges, en particulier le styrène.

Plus particulièrement, le polymère consiste en un ou plusieurs copolymères bloc choisis parmi les copolymères séquencés, de styrène et de butadiène, de styrène et d'isoprène, de styrène et de chloroprène, de styrène et de butadiène carboxylé ou encore de styrène et d'isoprène carboxylé. Un copolymère bloc préféré est un copolymère à base de motifs butadiène et de motifs styrène tel que le copolymère bloc styrène/butadiène SB ou le copolymère bloc styrène/butadiène/styrène SBS.

Le copolymère bloc de styrène et de diène conjugué, en particulier le copolymère bloc de styrène et de butadiène, possède avantageusement une teneur pondérale en styrène allant de 5 à 50%, de préférence de 20 à 50%.

Le copolymère bloc de styrène et de diène conjugué, en particulier le copolymère bloc de styrène et de butadiène, possède avantageusement une teneur pondérale en butadiène (1-2 et 1-4) allant de 50 à 95%. Le copolymère bloc de styrène et de diène conjugué, en particulier le copolymère de styrène et de butadiène, possède avantageusement une teneur pondérale en groupement 1-2 vinyle allant de 10 à 70%, de préférence de 10 à 50%, plus préférentiellement de 10 à 40%, encore plus préférentiellement de 20 à 40%. Les motifs 1-2 vinyle sont les motifs qui résultent de la polymérisation via l'addition 1-2 des motifs butadiène.

La masse moléculaire moyenne du copolymère bloc de styrène et de diène conjugué, et notamment celle du copolymère de styrène et de butadiène, peut être comprise, par exemple, entre 10 000 et 500 000, de préférence entre 50 000 et 200 000 et plus préférentiellement de 50 000 à 150 000 daltons.

Dans un mode de réalisation spécifique, le liant clair ne comprend pas de polymère du type éthylène-acétate de vinyle (EVA) ou du type polyéthylène à basse densité, tel que l'EPDM (éthylène-propylène-diène-monomère) ou EPM (éthylène-propylène monomère).

Dans un mode de réalisation spécifique, la quantité totale de polymère bloc mis en œuvre dans le procédé de l'invention est comprise entre 0,5 et 20% en masse, de préférence entre 1 et 10%, de préférence entre 1 et 7%, par exemple entre 2% et 5%.

### Les dopes d'adhésivité

Pour améliorer l'affinité réciproque entre le liant et les granulats et en assurer la pérennité, des dopes d'adhésivité peuvent également être utilisés. II s'agit par exemple de composés tensioactifs azotés dérivés des acides gras (amines, polyamines, alkyl-polymanne etc...).

Lorsqu'ils sont ajoutés au liant clair, les dopes d'adhésivité représentent en général entre 0,05% et 0,5% en poids par rapport au poids de liant clair. Par exemple, dans un mode de réalisation spécifique, on ajoutera entre 0,05% et 0,5% d'amine, de préférence entre 0,1% et 0,3% d'amine.

### Les agents colorants

Le liant synthétique clair peut également comprendre un ou plusieurs agents colorants, tels que des pigments minéraux ou des colorants organiques. Les pigments sont sélectionnés suivant la teinte, la couleur souhaitée pour le revêtement. On utilisera par exemple des oxydes métalliques tels que des oxydes de fer, des oxydes de chrome, des oxydes de cobalt, des oxydes de titane pour obtenir les couleurs rouge, jaune, gris, vert bleu ou blanc. Les pigments peuvent être ajoutés, indifféremment dans le liant clair ou dans l'enrobé (en mélange avec les granulats par exemple) ou dans une émulsion du liant clair.

### Procédé de préparation du liant clair

La présente invention concerne également le procédé de préparation des liants clairs selon l'invention. Ce procédé comprend les étapes suivantes :
(i) mélange de l'agent plastifiant, par exemple l'huile DAO, et chauffage à une température comprise entre 140-200°C, par exemple de 10 minutes à 30 minutes,
(ii) ajout de l'agent structurant, par exemple la résine hydrocarbonée, mélange et chauffage à une température comprise entre 140-200°C, par exemple de 30 minutes à 2 heures,
(iii) ajout du ou des polymères, par exemple le SBS, mélange et chauffage à une température comprise entre 140-200°C, par exemple, de 90 minutes à 3 heures, de préférence de 90 minutes à 2 heures 30,
(iv) ajout éventuel d'un dope d'adhésivité, mélange et chauffage à une température comprise entre 140-200°C, par exemple, de 5 minutes à 20 minutes.

L'ordre des étapes (i) à (iv) peut être modifié.

Dans un mode de réalisation spécifique, une composition de liant clair selon l'invention comprend, par rapport au poids total de liant clair :
(i) de 40 à 80% en poids, de préférence de 45 à 70% en poids d'agent plastifiant, de préférence entre 55% et 70% en poids d'agent plastifiant, par exemple une huile DAO,
(ii) de 20 à 45% en poids, de préférence de 25 à 40% en poids d'agent structurant, par exemple une résine hydrocarbonée,
(iii) de 1 à 7% en poids de polymères, de préférence entre 4% et 6% de polymères, par exemple un copolymère bloc de type SBS,
(iv) éventuellement de 0,05% à 0,5% en poids de dope, de préférence entre 0,1% et 0,3% en poids de dope, par exemples des amines.

De préférence, le liant clair selon l'invention a une pénétrabilité à 25°C, mesurée selon la norme NF EN 1426, comprise entre 10 et 220 1/10 mm, de préférence entre 30 et 100 1/10 mm, plus préférentiellement entre 40 et 80 1/10 mm, de préférence également entre 10 et 50 1/10 mm, plus préférentiellement entre 10 et 40 1/10 mm. L'homme du métier peut moduler la pénétrabilité du liant clair notamment en choisissant judicieusement le rapport en poids [agent structurant/agent plastifiant] dans la composition du liant clair. En effet, il est connu qu'une augmentation de ce rapport permet de diminuer la pénétrabilité à 25°C.

De préférence, le liant clair selon l'invention présente une température de ramollissement Température Bille-Anneau déterminée selon la norme NF EN1427 comprise entre 50°C et 90°C, et un point de fragilité Fraass déterminé selon la norme NF EN 12593 inférieur ou égal à -5°C, de préférence inférieur ou égal à -10°C, plus préférentiellement inférieur ou égal à -12°.

De préférence, le liant clair selon l'invention présente un indice de couleur inférieur ou égal à 4, de préférence inférieur ou égal à 3, tel que déterminé selon l'échelle ASTM DH4.

De préférence, le liant clair selon l'invention présente une viscosité dynamique à 135°C inférieure ou égal à 0,5 Pa.s, de préférence inférieure ou égale à 0,35 Pa.s, ladite viscosité étant mesurée selon la norme NF EN 13702.

De préférence, le liant clair selon l'invention présente une résistance à l'orniérage à 10000 cycles inférieur à 15%. Le test de résistance à l'orniérage est réalisé selon la norme NF EN 12697-22 A1 et IN1 afin de déterminer le comportement en déformation des matériaux bitumineux soumis à des charges roulantes.

### Applications du liant clair

Le liant clair selon l'invention peut être utilisé et appliqué indifféremment via les techniques dites « à chaud », « tièdes » ou les techniques dites « à froid » bien connues par l'homme de l'art.

Par techniques à chaud, on entend des techniques dans lesquelles le liant clair est porté lors de son application à des températures relativement élevées. Les techniques à chaud conduisent à des enduits, des asphaltes et à des enrobés dits « à chaud » tels que les graves-bitume, les enrobés à module élevé, les sables- bitume, les bétons bitumineux semi-grenus (BBSG), les bétons bitumineux à module élevé (BBME), les bétons bitumineux souples (BBS), les bétons bitumineux minces (BBM), les bétons bitumineux drainants (BBDr), les bétons bitumineux très minces (BBTM), les bétons bitumineux ultra-minces (BBUM). Le liant clair selon l'invention est adapté à la préparation des enrobés, des asphaltes et des enduits mentionnés ci-dessus.

L'invention a donc également pour objet des enrobés comprenant un liant clair selon l'invention, des granulats, éventuellement des charges et éventuellement des pigments.

Les charges (ou fines) sont des particules de dimensions inférieures à 0,063 mm. Les granulats comprennent des particules de dimensions 0/2 (sable), 2/4 (gravillons), 4/6 et 6/10.

L'enrobé comprend en général de 1 à 10% en poids de liant synthétique clair, par rapport au poids total de l'enrobé, de préférence de 4 à 8 % en masse, le reste étant constitué par les granulats, éventuellement les charges et éventuellement les pigments (les pigments représentant une quantité en masse de 0 à 1% de l'enrobé, les charges représentant une quantité en poids de 0 à 2% de l'enrobé).

L'invention a pour autre objet des asphaltes coulés comprenant un liant clair selon l'invention, des charges minérales et éventuellement des pigments. L'asphalte comprend de 1 à 20% en poids de liant clair, par rapport au poids total de l'asphalte, de préférence de 5 à 10% en poids, le reste étant constitué par les charges et éventuellement les pigments (les pigments représentant une quantité en masse de 0 à 1% de l'asphalte).

Grâce à la faible viscosité du liant clair selon l'invention, le procédé de préparation des enrobés à chaud ou des asphaltes va être caractérisé par des températures moins élevées que dans les procédés traditionnels de préparation des enrobés à chaud ou des asphaltes. En effet, dans les procédés traditionnels de préparation des enrobés à chaud (ou des asphaltes), on mélange d'abord le liant avec des granulats, éventuellement des charges et éventuellement des pigments (sans les granulats pour les asphaltes), à une température dite de fabrication ou température d'enrobage de l'ordre de 160°C à 180°C pour les enrobés et de l'ordre de 200°C à 250°C pour les asphaltes. Le mélange liant/granulats/charges/pigments ou liant/charges/pigments est ensuite répandu (pour les enrobés) ou coulé (pour les asphaltes) à une température dite de mise en œuvre de l'ordre de 140°C à 160°C pour les enrobés et de l'ordre de 180°C à 230°C pour les asphaltes. Pour les enrobés, il existe ensuite une étape de compactage à une température dite de compactage de l'ordre de 130°C à 140°C. Après le compactage de l'enrobé ou le coulage de l'asphalte, l'enrobé ou l'asphalte sont refroidis à température ambiante.

Le procédé de préparation des enrobés selon l'invention, est caractérisé par une température de fabrication comprise entre 100°C et 160°C, de préférence entre 120°C et 140°C, une température de mise en œuvre comprise entre 80°C et 140°C, de préférence entre 100°C et 120°C, une température de compactage comprise entre 70°C et 130°C, de préférence entre 90°C et 110°C.

Le procédé de préparation des asphaltes selon l'invention, est caractérisé par une température de fabrication comprise entre 140°C et 180°C, de préférence entre 150°C et 170°C, une température de mise en œuvre comprise entre 120°C et 160°C, de préférence entre 130°C 150°C. Les procédés de préparation selon l'invention, permettent donc de réduire les dépenses énergétiques et les émissions de fumée, lors de la préparation des enrobés ou asphaltes selon l'invention.

Par techniques à froid, on entend des techniques basées sur l'utilisation d'émulsions de liant clair en phase aqueuse, à des températures plus faibles. Les techniques à froid conduisent à des enduits superficiels, des coulis, des enrobés coulés à froid, des enrobés à froid, des bétons bitumineux à froid, des graves-émulsion, des enrobés à froid stockables. Le liant clair selon l'invention est adapté à la préparation des produits mentionnés ci-dessus.

L'invention a donc également pour objet une émulsion de liant clair comprenant un liant clair selon l'invention, de l'eau et un agent émulsifiant. Le liant clair comprend au moins un agent plastifiant, au moins un agent structurant et au moins un polymère, tels que définis ci-dessus.

L'invention a donc également pour objet un procédé de préparation d'une émulsion de liant clair comprenant :
(i) la préparation d'un liant clair par mélange d'au moins un agent plastifiant, d'au moins un agent structurant et d'au moins un polymère, tels que définis ci-dessus,
(ii) la préparation d'une solution émulsifiante par mélange de l'eau et de l'agent émulsifiant,
(iii) la dispersion du liant clair de l'étape (i) dans la solution émulsifiante de l'étape (ii).

L'émulsion de liant clair selon l'invention comprend de préférence de 50% à 80% en poids de liant clair, de préférence de 60% à 70%.

L'invention a donc également pour objet des enrobés à froid obtenus par mélange de l'émulsion de liant clair avec des granulats, éventuellement des charges et éventuellement des pigments. L'invention a aussi pour objet des enduits obtenus à partir de l'émulsion de liant clair, de granulats, éventuellement de charges et éventuellement de pigments.

L'utilisation du liant clair de l'invention comme lubrifiant pour les câbles de téléphériques, ou plus généralement, pour les câbles utilisées dans le transport de charges lourdes, et exposés à des températures inférieures à -10°C, et/ou à de fortes amplitudes thermiques est avantageux, notamment en raison de la plasticité élevée de ce liant clair.

D'autres buts, caractéristiques et avantages de l'invention apparaîtront des exemples suivants, qui sont donnés à titre purement illustratif et nullement limitatif.

### EXEMPLES

### Préparation d'une composition de liant clair selon l'invention (exemple 1)

Un exemple de liant clair selon l'invention (exemple 1) comprend les constituants suivants :
- 63,8% massique d'une huile DAO caractérisée par une teneur de 67% en composés paraffiniques, 19% en composés naphténiques, et 14% en composés aromatiques en tant qu'agent plastifiant ;
- 31% massique d'une résine hydrocarbonée en tant qu'agent structurant;
- 5% massique d'un copolymère SBS en poudre;
- 0,2% massique d'un dope d'adhésivité de type amine.

Le liant clair selon l'exemple 1 est préparé selon le procédé suivant :
(i) On chauffe l'huile DAO, par exemple à 170°C ;
(ii) On ajoute la résine, et on mélange par exemple de 1 h à 2 h à 170°C avec une vitesse d'agitation de 300 tr/min ;
(iii) On ajoute le copolymère SBS en poudre, et on mélange par exemple 2 h à 170°C avec une vitesse d'agitation de 300 tr/min ;
(iv) Le cas échéant, on ajoute le dope d'adhésivité sous forme liquide puis on mélange par exemple pendant 15 minutes à 170°C.

### Préparation des compositions de liant clair témoins

Les compositions de liant clair témoins T1 à T4 sont préparées selon des méthodes sensiblement similaires à celle décrite au paragraphe précédent mais avec les constituants et proportions (en pourcentage en poids par rapport au poids total de liant clair) comme suit :

**Tableau 1 : Composition des liants clairs témoins**

| | **T1** | **T2** | **T3** | **T4** |
|---|---|---|---|---|
| **Huile RAE¹** | **61,8 %** | **62,0 %** | **-** | **-** |
| **Huile DAO** | **-** | **-** | **63,8 %** | **63,8 %** |
| **Résine**² | **33,0 %** | **32,8 %** | **31,0 %** | **31,0 %** |
| **copolymère** SBS **³** | **5,0 %** | | **-** | **-** |
| **Polymère EVA** | **-** | **2,0 %** | **-** | **-** |
| **Polymère EPDM** | **-** | **-** | **-** | **5,0 %** |
| **copolymère** thermoplastique ⁴ | | **3,0 %** | **5,0 %** | **-** |
| **Dope** | **0,2%** | **0,2%** | **0,2%** | **0,2%** |

| | | | | |
|---|---|---|---|---|
| ¹ RAE signifie « Residual Aromatic Extracts » et se réfère aux résidus d'extraits aromatiques de produits pétroliers. L'huile RAE utilisée dans les exemples T1 à T4 a la composition suivante : 31% en composés paraffiniques, 49% en composés naphténiques, et 20% en composés aromatiques ² Résine hydrocarbure obtenue par polymérisation des hydrocarbures aromatiques insaturés C9-C10. Sa température de fusion est comprise entre 135 et 145°C selon l'ASTM D 3461. ³ Copolymère bloc linéaire 70/30 Styrène/Butadiène/Styrène comprenant une teneur pondérale en groupement 1-2 vinyle de 28,5% et de masse moléculaire d'environ 140 000 daltons équivalent polystyrène (PS). ⁴ Copolymère thermoplastique 70/30 Butadiène/Styrène de structure radiale, polymérisé en solution, comprenant une teneur pondérale en groupement 1-2 vinyle de 7,1% et de masse moléculaire d'environ 330 000 daltons équivalent polystyrène (PS). | | | | |

### Etude des propriétés des liants clairs selon l'invention

Le tableau 2 suivant présente les propriétés physico-mécaniques du liant clair selon l'exemple 1 (Ex. 1) en comparaison avec les liants témoins T1 à T4.

L'exemple 1 et les liants témoins T1 et T2 sont de grade 50/70 étant donné que leurs pénétrabilités sont comprises entre 50 et 70 1/10 mm.

**Tableau 2 : Etude comparative (n.d signifie valeur non déterminée)**

| | **Norme** | **Ex. 1** | **T1** | **T2** | **T3** | **T4** |
|---|---|---|---|---|---|---|
| **Pénétration (1/10 mm)** | **EN 1426** | **68** | **62** | **59** | **72** | **92** |
| **TBA (°C)** | **EN 1427** | **76,5** | **51** | **53,4** | **90,4** | **61** |
| **Fraass (°C)** | **EN12593** | **<-25** | **-8** | **-8** | **<-25** | **n.d** |
| **Visco dynamique 135°C (Pa.s)** | **EN 13702** | **0,292** | **n.d** | **n.d** | **0,661** | **2,18** |
| **Visco dynamique 160°C (Pa.s)** | **EN 13702** | **0,12** | **0,237** | **0,267** | **0,246** | **1,04** |
| **Couleur** | **ASTM DH4** | **2,5** | **n.d** | **4,5** | **2,5** | **2,5** |
| **Orniérage 10000 cycles** | **EN 12697-22 A1 et IN1** | **10** | **n.d** | **n.d** | **8,6** | **Non mesurable (12% à 1000)** |

On constate que le liant clair selon l'exemple 1 présente les avantages suivants, notamment par rapport aux témoins T1 et T2 comprenant une huile RAE :
(i) un indice de plasticité amélioré,
(ii) une viscosité divisée par deux,
(iii) une couleur plus claire,
(iv) une résistance à l'orniérage et une pénétration satisfaisante.

On constate également que le liant clair selon l'exemple 1 présente une viscosité diminuée par deux par rapport au témoin T3 comprenant une combinaison d'une huile DAO avec un copolymère thermoplastique Butadiène/Styrène de structure radiale.

### Préparation d'une composition de liant clair selon l'invention (exemples 2 et 3)

Deux liants clairs selon l'invention sont préparés à partir des constituants rapportés dans le tableau 3. Les teneurs sont des teneurs en poids par rapport au poids total de la composition.

Le liant clair selon l'exemple 2 est de grade 50/70 car sa pénétrabilité est comprise entre 50 et 70 1/10 mm.

Le liant clair selon l'exemple 3 est de grade 20/30 car sa pénétrabilité est comprise entre 20 et 30 1/10 mm.

**Tableau 3 : composition des exemples 2 et 3 et propriétés de ces compositions**

| | Exemple 2 | Exemple 3 |
|---|---|---|
| **Huile DAO** | 61,6 % | 54,3 % |
| **Résine**² | 33,2 % | 40,0 % |
| **Copolymère** SBS**³** | 5,0 % | 5,5 % |
| **Dope** | 0,2 % | 0,2 % |
| **Pénétration (1/10 mm) EN 1426** | 64,4 | 27,9 |
| **TBA (°C) EN 1427** | 82,0 | 84 |

| | | |
|---|---|---|
| ² Résine hydrocarbure obtenue par polymérisation des hydrocarbures aromatiques insaturés C9-C10. Sa température de fusion est comprise entre 135 et 145°C selon l'ASTM D 3461. ³ Copolymère bloc linéaire 70/30 Styrène/Butadiène/Styrène comprenant une teneur pondérale en groupement 1-2 vinyle de 28,5% et de masse moléculaire d'environ 140 000 daltons équivalent polystyrène (PS). | | |

### Température de fissuration des liants avant et après vieillissement

Les liants clairs selon les exemples 2 et 3 ont été conditionnés en 3 échantillons de chaque (échantillons de l'exemple 2 : L1, L2, L3 et échantillons de l'exemple 3 : L4, L5, L6).

Le liant clair selon le témoin T2 a été conditionné en 2 échantillons : L7 et L8.

Les échantillons L1, L4 et L7 n'ont pas subi de vieillissement.

Les échantillons L2, L5 et L8 ont été soumis à un test de vieillissement RTFOT (Rolling Thin Film Oven Test) selon la norme EN 12607-1. Les échantillons L2 et L5 ainsi vieillis sont récupérés afin de déterminer leurs caractéristiques dites après RTFOT.

Les échantillons L3 et L6 ont été soumis consécutivement à un test de vieillissement RTFOT selon la norme EN 12607-1 puis à un test de vieillissement PAV (Pressure Ageing Vessel) selon la norme EN 14769. Les échantillons L3 et L6 préalablement vieillis par l'essai RTFOT sont chauffés et versés dans des plateaux métalliques qui sont conservés à 100°C sous une pression de 2,1 MPa pendant 20 heures. Les échantillons L3 et L6 ainsi vieillis sont récupérés après avoir été chauffés pour être fluides afin de déterminer leurs caractéristiques dites après RTFOT + PAV.

Les échantillons L1 à L8 sont ensuite soumis à un test ABCD (Asphalt Binder Cracking Device). Le test ABCD se déroule selon le protocole AASHTO TP92-11 déterminant la température de fissuration de l'échantillon de liant. L'échantillon de liant (environ 14 g) est coulé dans un entrefer entre un anneau Invar et un moule en silicone. L'échantillon ainsi coulé est placé dans une enceinte thermostatée pendant 1 heure à une température de 5°C, puis la température est abaissée jusqu'à -60°C avec une vitesse de 2°C par heure entrainant la contraction du liant et permettant ainsi de déterminer la température de fissuration de l'échantillon.

Les échantillons L1 à L8 ont été soumis au test ABCD selon le protocole tel que décrit ci-dessus. Les températures de fissuration des échantillons L1 à L8 sont respectivement regroupées dans le Tableau 4 ci-dessous.

**Tableau 4 : Températures de fissuration des échantillons L1 à L8**

| | Température de fissuration (°C) |
|---|---|
| L1 | -53.8 |
| L2 | -53.4 |
| L3 | -52.9 |
| L4 | -40.6 |
| L5 | -38.4 |
| L6 | -34.8 |
| L7 | -34.7 |
| L8 | -33.8 |

La température de fissuration des échantillons L2, L3 ayant respectivement subis un vieillissement RTFOT et RTFOT+PAV est conservée par rapport à la température de fissuration de l'échantillon L1 n'ayant pas subi de vieillissement.

La température de fissuration des échantillons L5 et L6 ayant respectivement subi un vieillissement RTFOT et RTFOT+PAV est légèrement augmentée par rapport à la température de fissuration de l'échantillon L4 n'ayant pas subi de vieillissement mais cette augmentation de la température de fissuration des échantillons L5 et L6 reste cependant acceptable pour des échantillons de grade 20/30.

Par ailleurs, les échantillons L1 et L7 étant de grade 50/70 n'ont pas subi de vieillissement contrairement aux échantillons L2 et L8, tous deux de grade 50/70, ayant subis un vieillissement RTFOT.

On remarque que pour un même grade 50/70, les échantillons L1 et L2 comprenant une huile DAO, présentent respectivement une température de fissuration de -53.8°C et - 53.4°C contrairement aux échantillons L7 et L8 comprenant une huile RAE, qui présentent respectivement une température de fissuration de -34.7°C et -33.4°C.

Par conséquent, le liant clair selon l'invention présente l'avantage d'avoir une température de fissuration nettement supérieure à la température de fissuration d'un liant clair comprenant une huile RAE. Ceci signifie, que le liant clair selon l'invention présente une plus faible susceptibilité au froid que le liant clair comprenant une huile RAE et par conséquent, le liant clair selon l'invention est plus résistant à basse température.

## Revendications

1. Liant clair comprenant
(i) de 40 à 80% en poids d'un agent plastifiant constitué d'une huile contenant une teneur totale en composés paraffiniques, mesurée selon la méthode ASTM D2140, d'au moins 50% en poids, de préférence supérieure ou égale à 60%,
(ii) de 20 à 50% en poids d'agent structurant,
(iii) de 1 à 7% en poids d'au moins un copolymère bloc à base de motifs diène conjugué et de motifs hydrocarbure monovinyl aromatique, par exemple à base de motifs butadiène et de motifs styrène,
et,
(iv) éventuellement de 0,05% à 0,5% en poids de dope d'adhésivité,
en poids par rapport au poids de liant clair.

2. Liant clair selon la revendication 1, **caractérisé en ce que** l'huile est une huile synthétique issue des coupes d'unité de désasphaltage (DAO).

3. Liant clair selon les revendications 1 ou 2, **caractérisé en ce que** l'huile contient une teneur totale en composés paraffiniques d'au moins 50% en poids, et une teneur totale en naphténiques inférieure ou égale à 25% en poids, mesurée selon la méthode ASTM D2140.

4. Liant clair selon l'une des revendications précédentes, **caractérisé en ce que** l'huile contient une teneur totale en composés paraffiniques, mesurée selon la méthode ASTM D2140, comprise entre 50% et 90% en poids, et une teneur totale en composés naphténiques comprise entre 5% et 25% en poids.

5. Liant clair selon l'une des revendications précédentes, **caractérisé en ce que** l'huile a un point d'aniline mesuré selon la norme ISO 2977 :1997, supérieur ou égal à 80°C, de préférence supérieur à 90°C, par exemple supérieur à 100°C.

6. Liant clair selon l'une des revendications précédentes, **caractérisé en ce que** le copolymère bloc est un copolymère de styrène et de butadiène, et qu'il comprend une teneur pondérale en groupements 1-2-vinyle allant de 10 à 70%, de préférence de 10 à 50%, plus préférentiellement de 10 à 40%.

7. Liant clair selon l'une des revendications précédentes, **caractérisé en ce que** le copolymère bloc de styrène et de butadiène a une masse moléculaire moyenne comprise entre 10 000 et 500 000, de préférence entre 50 000 et 200 000, et plus préférentiellement entre 50 000 et 150 000 daltons.

8. Liant clair selon l'une des revendications précédentes, **caractérisé en ce que** le copolymère est un copolymère bloc styrène/butadiène ou bloc styrène/butadiène/styrène.

9. Liant clair selon l'une des revendications précédentes, **caractérisé en ce qu'**il présente un indice de couleur inférieur ou égal à 4, de préférence inférieur ou égal à 3, tel que déterminé selon l'échelle ASTM DH4.

10. Liant clair selon l'une des revendications précédentes, **caractérisé en ce qu'**il présente une température de ramollissement Température Bille-Anneau déterminée selon la norme EN1427 comprise entre 55°C et 90°C, et un point de fragilité Fraass déterminé selon la norme EN 12593 inférieur ou égal à -5°C, de préférence inférieur ou égal à - 10°C, plus préférentiellement inférieur ou égal à -12°C.

11. Liant clair selon l'une des revendications précédentes, **caractérisé en ce qu'**il présente une viscosité dynamique, mesurée selon la norme NF EN 13702, à 135°C inférieure ou égale à 0,5 Pa.s, de préférence inférieure ou égale à 0,35 Pa.s.

12. Liant clair selon l'une des revendications précédentes **caractérisé en ce qu'**il présente une pénétrabilité à 25°C, mesurée selon la norme NF EN 1426, comprise entre 10 et 220 ^{1/10}mm, de préférence entre 30 et 100 ^{1/10}mm, par exemple entre 40 et 80 ^{1/10} mm.

13. Emulsion comprenant un liant clair selon l'une des revendications 1 à 12, de l'eau, et un agent émulsifiant.

14. Emulsion selon la revendication 13, dans laquelle le liant clair représente de 50 à 80% en poids par rapport au poids total de l'émulsion.

15. Enrobé comprenant (i) un liant clair selon l'une des revendications 1 à 12 ou une émulsion selon l'une des revendications 13 ou 14, (ii) un granulat et/ou une charge minérale, et éventuellement (iii) un ou plusieurs pigments.

## Patentansprüche

1. Helles Bindemittel, umfassend:
(i) 40 bis 80 Gew.-% eines Weichmachers, bestehend aus einem Öl mit einem gemäß ASTM-Methode D2140 gemessenen Gesamtgehalt an paraffinischen Verbindungen von mindestens 50 Gew.-%, vorzugsweise größer oder gleich 60 %,
(ii) 20 bis 50 Gew.-% Strukturbildner,
(iii) 1 bis 7 Gew.-% mindestens eines Blockcopolymers auf der Basis von Einheiten von konjugiertem Dien und Einheiten von monovinylaromatischem Kohlenwasserstoff, beispielsweise auf Basis von Butadien-Einheiten und Styrol-Einheiten,
und
(iv) gegebenenfalls 0,05 bis 0,5 Gew.-% Haftfestigkeitsverbesserer,
bezogen auf das Gewicht von hellem Bindemittel.

2. Helles Bindemittel nach Anspruch 1, **dadurch gekennzeichnet, dass** es sich bei dem Öl um ein synthetisches Öl aus den Schnitten einer Deasphaltierungseinheit (DAO) handelt.

3. Helles Bindemittel nach Anspruch 1 oder 2, **dadurch gekennzeichnet, dass** das Öl einen gemäß ASTM-Methode D2140 gemessenen Gesamtgehalt an paraffinischen Verbindungen von mindestens 50 Gew.-% und einen gemäß ASTM-Methode D2140 gemessenen Gesamtgehalt an naphthenischen Verbindungen kleiner als oder gleich 25 Gew.-% aufweist.

4. Helles Bindemittel nach einem der vorhergehenden Ansprüche, **dadurch gekennzeichnet, dass** das Öl einen gemäß ASTM-Methode D2140 gemessenen Gesamtgehalt an paraffinischen Verbindungen zwischen 50 und 90 Gew.-% und einen gemäß ASTM-Methode D2140 gemessenen Gesamtgehalt an naphthenischen Verbindungen zwischen 5 und 25 Gew.-% aufweist.

5. Helles Bindemittel nach einem der vorhergehenden Ansprüche, **dadurch gekennzeichnet, dass** das Öl einen gemäß ISO-Norm 2977:1997 gemessenen Anilinpunkt größer als oder gleich 80 °C, vorzugsweise größer als 90 °C, beispielsweise größer als 100 °C, aufweist.

6. Helles Bindemittel nach einem der vorhergehenden Ansprüche, **dadurch gekennzeichnet, dass** es sich bei dem Blockcopolymer um ein Copolymer von Styrol und Butadien handelt und dass es einen gewichtsbezogenen Gehalt an 1,2-Vinylgruppen im Bereich von 10 bis 70 %, vorzugsweise 10 bis 50 % und weiter bevorzugt 10 bis 40 % aufweist.

7. Helles Bindemittel nach einem der vorhergehenden Ansprüche, **dadurch gekennzeichnet, dass** es sich bei dem Blockcopolymer um ein Blockcopolymer von Styrol und Butadien mit einer mittleren Molmasse zwischen 10.000 und 500.000, vorzugsweise zwischen 50.000 und 200.000 und weiter bevorzugt zwischen 50.000 und 150.000 Dalton handelt.

8. Helles Bindemittel nach einem der vorhergehenden Ansprüche, **dadurch gekennzeichnet, dass** es sich bei dem Copolymer um ein Styrol/Butadien-Blockcopolymer oder Styrol/Butadien/Styrol-Blockcopolymer handelt.

9. Helles Bindemittel nach einem der vorhergehenden Ansprüche, **dadurch gekennzeichnet, dass** es eine gemäß der ASTM-DH4-Skala bestimmte Farbzahl kleiner als oder gleich 4 und vorzugsweise kleiner als oder gleich 3 aufweist.

10. Helles Bindemittel nach einem der vorhergehenden Ansprüche, **dadurch gekennzeichnet, dass** es eine gemäß der EN-Norm 1427 bestimmte Ring-und-Kugel-Erweichungstemperatur zwischen 55 °C und 90 °C, einen gemäß der EN-Norm 12593 bestimmten Brechpunkt nach Fraass kleiner als oder gleich -5 °C, vorzugsweise kleiner als oder gleich -10 °C und weiter bevorzugt kleiner als oder gleich -12 °C aufweist.

11. Helles Bindemittel nach einem der vorhergehenden Ansprüche, **dadurch gekennzeichnet, dass** es eine gemäß der NF-EN-Norm 13702 gemessene dynamische Viskosität bei 135 °C kleiner als oder gleich 0,5 Pa.s und vorzugsweise kleiner als oder gleich 0,35 Pa.s aufweist.

12. Helles Bindemittel nach einem der vorhergehenden Ansprüche, **dadurch gekennzeichnet, dass** es eine gemäß der NF-EN-Norm 1426 gemessene Penetrierbarkeit bei 25 °C zwischen 10 und 220 ^{1/10}mm, vorzugsweise zwischen 30 und 100 ^{1/10}mm, beispielsweise zwischen 40 und 80 ^{1/10}mm, aufweist.

13. Emulsion, umfassend ein helles Bindemittel nach einem der Ansprüche 1 bis 12, Wasser und einen Emulgator.

14. Emulsion nach Anspruch 13, wobei das helle Bindemittel 50 bis 80 Gew.-%, bezogen auf das Gesamtgewicht der Emulsion, ausmacht.

15. Mischgut, umfassend (i) ein helles Bindemittel nach einem der Ansprüche 1 bis 12 oder eine Emulsion nach einem der Ansprüche 13 bis 14, (ii) einen Zuschlag und/oder einen mineralischen Füllstoff und gegebenenfalls (iii) ein oder mehrere Pigmente.

## Claims

1. Clear binder comprising:
(i) from 40% to 80% by weight of a plasticizing agent consisting of an oil containing a total content of paraffinic compounds, measured according to the ASTM D2140 method, of at least 50% by weight, preferably of greater than or equal to 60%,
(ii) from 20% to 50% by weight of structuring agent,
(iii) from 1% to 7% by weight of at least one block copolymer based on conjugated diene units and on monovinylaromatic hydrocarbon units, for example based on butadiene units and on styrene units,
and,
(iv) optionally from 0.05% to 0.5% by weight of adhesion agent,
by weight, with respect to the weight of clear binder.

2. Clear binder according to Claim 1, **characterized in that** the oil is a synthetic oil resulting from the cuts from a deasphalting unit (DAO oil).

3. Clear binder according to Claim 1 or 2, **characterized in that** the oil contains a total content of paraffinic compounds of at least 50% by weight and a total content of naphthenics of less than or equal to 25% by weight, measured according to the ASTM D2140 method.

4. Clear binder according to one of the preceding claims, **characterized in that** the oil contains a total content of paraffinic compounds, measured according to the ASTM D2140 method, of between 50% and 90% by weight and a total content of naphthenic compounds of between 5% and 25% by weight.

5. Clear binder according to one of the preceding claims, **characterized in that** the oil has an aniline point, measured according to the ISO 2977:1997 standard, of greater than or equal to 80°C, preferably of greater than 90°C, for example of greater than 100°C.

6. Clear binder according to one of the preceding claims, **characterized in that** the block copolymer is a copolymer of styrene and of butadiene and that it comprises a content by weight of 1,2-vinyl groups ranging from 10% to 70%, preferably from 10% to 50% and more preferably from 10% to 40%.

7. Clear binder according to one of the preceding claims, **characterized in that** the block copolymer of styrene and of butadiene has an average molecular weight of between 10 000 and 500 000, preferably between 50 000 and 200 000 and more preferably between 50 000 and 150 000 daltons.

8. Clear binder according to one of the preceding claims, **characterized in that** the copolymer is a styrene/butadiene block or styrene/butadiene/styrene block copolymer.

9. Clear binder according to one of the preceding claims, **characterized in that** it exhibits a colour index of less than or equal to 4, preferably of less than or equal to 3, as determined according to the ASTM DH4 scale.

10. Clear binder according to one of the preceding claims, **characterized in that** it exhibits a ring-and-ball softening temperature, determined according to the EN 1427 standard, of between 55°C and 90°C and a Fraass breaking point, determined according to the EN 12593 standard, of less than or equal to -5°C, preferably of less than or equal to -10°C and more preferably of less than or equal to -12°C.

11. Clear binder according to one of the preceding claims, **characterized in that** it exhibits a dynamic viscosity, measured according to the NF EN 13702 standard, at 135°C of less than or equal to 0.5 Pa.s, preferably of less than or equal to 0.35 Pa.s.

12. Clear binder according to one of the preceding claims, **characterized in that** it exhibits a penetrability at 25°C, measured according to the NF EN 1426 standard, of between 10 and 220 ^{1/10}mm, preferably between 30 and 100 ^{1/10}mm, for example between 40 and 80 ^{1/10}mm.

13. Emulsion comprising a clear binder according to one of Claims 1 to 12, water and an emulsifying agent.

14. Emulsion according to Claim 13, in which the clear binder represents from 50% to 80%, with respect to the total weight of the emulsion.

15. Mix comprising (i) a clear binder according to one of Claims 1 to 12 or an emulsion according to either of Claims 13 and 14, (ii) an aggregate and/or a mineral filler, and optionally (iii) one or more pigments.
